# DEMANDE DE BREVET EUROPEEN

(11) **EP 1 859 984 A1**
(43) Date de publication de la demande: **28.11.2007**
(21) Numéro de dépôt: 07356070.8
(22) Date de dépôt: 22.05.2007
(51) Int. Cl.: B60K 13/02, F02M 35/16, B62M 7/00

(54) **Ensemble d'admission d'air comburant pour motocyclette et motocyclette equipée d'un tel ensemble**

(30) Priorité: 23.05.2006 FR 0604606
(71) Demandeur: Engineering and More, 34150 Aniane (FR)
(72) Inventeur: Domergue, Joël Léon Robert, 34150 Aniane (FR)
(74) Mandataire: Myon, Gérard Jean-Pierre

(57) **Abrégé**

Cet ensemble (10) d'admission d'air comburant pour le moteur d'une motocyclette comprend :
- un filtre à air (12) ;
- un boîtier (11) destiné à être monté en partie supérieure de la motocyclette et formant support pour le filtre à air (12) ;
- un module d'entrée d'air (13) rapporté sur le boîtier et équipé d'au moins un obturateur (131, 131') mobile ;
- des moyens de commande des mouvements de l'obturateur (131, 131') et
- des moyens (17, 171-174) de montage de l'ensemble en partie supérieure (21) de la motocyclette.

Le filtre à air (12) est globalement annulaire et divise le volume interne du boîtier (11) en une chambre radiale interne et une chambre radiale externe. La chambre radiale interne est alimentée en air à travers le module d'entrée d'air (13), alors que la chambre radiale externe forme, autour du filtre à air (12) une chambre de stabilisation de l'écoulement d'air en aval du filtre.

## Description

L'invention a trait à un ensemble d'admission d'air comburant pour le moteur d'une motocyclette. L'invention a également trait à une motocyclette équipée d'un tel ensemble d'admission d'air.

Dans le domaine des motocyclettes, il est connu par US-A-5 307 771 de disposer sur le trajet d'air comburant d'un moteur à explosion un filtre à air destiné à empêcher ou limiter la pénétration d'impuretés dans le ou les cylindres du moteur. Dans certaines motocyclettes de forte cylindrée, un tel filtre à air est disposé sur un côté du moteur à proximité d'un des genoux du pilote, ce qui peut gêner celui-ci. En outre, compte tenu de ce positionnement du filtre à air sur un côté de la motocyclette, le boîtier de protection dans lequel il est généralement reçu doit avoir un volume le plus faible possible afin de ne pas perturber l'aérodynamisme global de la motocyclette. Dans ces conditions, il n'est pas rare que l'écoulement d'air filtré en direction du moteur soit instable ou tourbillonnaire, au point de gêner la combustion. En particulier, US-A-5 307 771 prévoit une circulation d'air de l'extérieur vers l'intérieur du filtre à air, ce qui est indispensable pour permettre son alimentation par une seconde ouverture formée dans une cloison du boîtier.

JP-A-62 046 795 divulgue un boîtier qui semble pourvu d'une bouche d'entrée équipée d'un volet et de tubulures de sorties. La géométrie et la position d'un filtre à air à l'intérieur du boîtier ne sont pas divulguées et l'air entrant dans le boîtier risque d'en ressortir sous la forme d'un écoulement turbulent et ce, d'autant plus que le boîtier doit être compact pour être logé dans un évidement central du réservoir de carburant d'une motocyclette.

C'est à ces inconvénients qu'entend plus particulièrement remédier l'invention en proposant un nouvel ensemble d'admission d'air comburant pour le moteur d'une motocyclette qui permet de stabiliser l'écoulement d'air filtré, sans gêner le pilote et sans perturber sensiblement l'aérodynamisme de la motocyclette.

A cet effet, l'invention concerne un ensemble d'admission d'air comburant pour le moteur d'une motocyclette, cet ensemble comprenant :
- un filtre à air,
- une tubulure d'amenée d'air au moteur à partir de ce filtre à air,
- un boîtier destiné à être monté en partie supérieure de la motocyclette et qui forme un support pour le filtre à air ;
- un module d'entrée d'air rapporté sur le boîtier et équipé d'au moins un obturateur mobile entre une première position, où il obture une bouche d'écoulement d'air vers une zone interne du boîtier située en amont du filtre à air, et une deuxième position, où il autorise un écoulement d'air dans cette bouche d'air, en direction de la zone interne du boîtier ;
- des moyens de commande des mouvements de l'obturateur entre ses première et deuxième positions et
- des moyens de montage de l'ensemble en partie supérieure de la motocyclette.

Cet ensemble est caractérisé en ce que le filtre à air est de forme globalement annulaire et, lorsqu'il est disposé à l'intérieur du boîtier, divise le volume interne du boîtier en une chambre radiale interne et une chambre radiale externe, en ce que la chambre radiale interne est alimentée en air à travers le module d'entrée d'air et en ce que la chambre radiale externe forme, autour du filtre à air, une chambre de stabilisation de l'écoulement d'air en aval du filtre à air.

L'ensemble d'admission d'air conforme à l'invention peut être disposé à l'avant du pilote dans le volume habituellement occupé par le réservoir de carburant, ce volume étant suffisamment important pour que la chambre de stabilisation, interne au boîtier et qui est formée en aval du filtre à air, puisse être efficace. Le module d'entrée d'air peut ainsi être disposé sur le dessus de l'ensemble d'admission d'air, dans une zone d'écoulement globalement laminaire de l'air entourant la motocyclette.

Selon des aspects avantageux mais non obligatoires de l'invention, un ensemble d'admission d'air peut incorporer une ou plusieurs des caractéristiques suivantes :
- Le filtre à air est annulaire et divise le volume interne du boîtier en deux parties, à savoir la zone amont précitée, qui est située radialement à l'intérieur du filtre, et la chambre de stabilisation précitée, qui est située radialement à l'extérieur du filtre.
- La tubulure est disposée entre la chambre de stabilisation et le moteur en étant équipée d'au moins un obturateur mobile entre une première position, où il obture la tubulure, et une seconde position, où il permet un écoulement dans cette tubulure.
- Il est prévu des moyens distincts du module d'entrée d'air qui permettent d'alimenter en air la zone interne, alors que l'obturateur du module d'entrée d'air est dans sa première position d'obturation de la bouche d'écoulement.
- Les moyens de montage comprennent des moyens d'immobilisation de l'ensemble d'admission d'air sur une poutre du châssis de la motocyclette située au-dessus de son moteur. Ces moyens de montage peuvent comprendre une plaque apte à être rapportée sur la poutre précitée et à supporter le boîtier équipé du module. Dans ce cas, les moyens de montage comprennent avantageusement une vis et un taraudage complémentaires portés respectivement par le module d'entrée d'air et par la plaque, ou réciproquement, la vis et/ou un organe pourvu du taraudage s'étendant à travers la zone amont du boîtier et permettant un assemblage du module et de la plaque par vissage, le boîtier étant intercalé entre eux.

L'invention concerne également une motocyclette équipée d'un ensemble d'admission d'air tel que décrit ci-dessus, cet ensemble étant installé globalement entre la selle et le guidon de la motocyclette, au-dessus du moteur, la chambre de stabilisation étant disposée de façon globalement symétrique par rapport à un plan médian vertical de la motocyclette.

Une telle motocyclette est plus agréable à piloter, alors que l'alimentation en air comburant de son moteur est plus régulière que pour les motocyclettes connues.

Selon des aspects avantageux mais non obligatoires de l'invention, une motocyclette peut incorporer une, l'autre ou les deux caractéristiques suivantes :
- Le module d'entrée d'air est disposé sur le dessus du boîtier, avec sa ou ses bouches d'entrée orientées vers l'avant de la motocyclette.
- L'ensemble d'admission d'air occupe sensiblement le volume du réservoir de carburant d'une motocyclette classique.

L'invention sera mieux comprise et d'autres avantages de celle-ci apparaîtront plus clairement à la lumière de la description qui va suivre d'un mode de réalisation d'un ensemble d'admission d'air et d'une motocyclette conformes à son principe, donnée uniquement à titre d'exemple et faite en référence aux dessins annexés dans lesquels :
- la figure 1 est une vue de côté d'une motocyclette conforme à l'invention incorporant un ensemble d'admission d'air conforme à l'invention ;
- la figure 2 est une vue de dessus de la motocyclette de la figure 1 ;

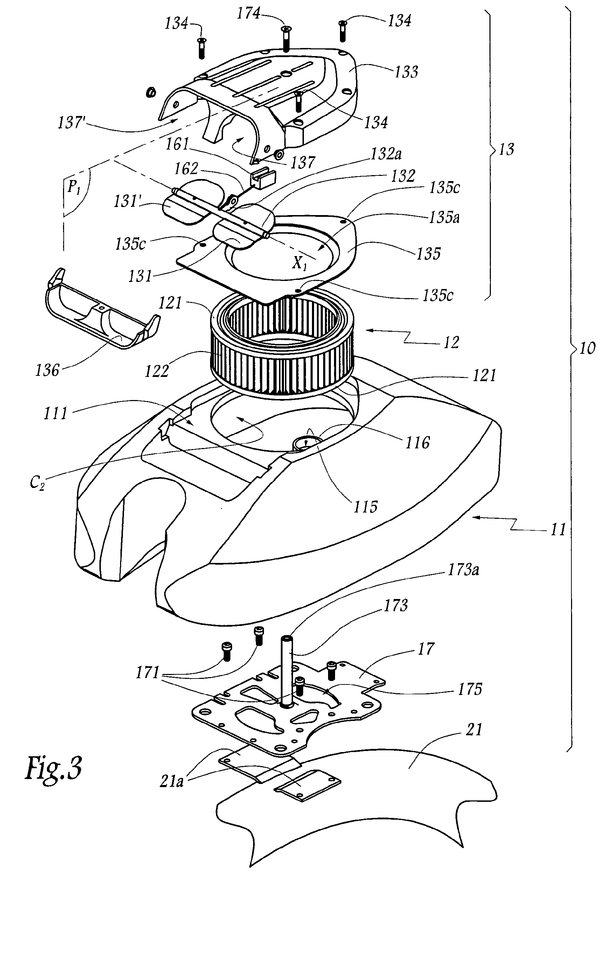

- la figure 3 est une vue en perspective éclatée de l'ensemble d'admission d'air de la motocyclette des figures 1 et 2,
- la figure 4 est une vue en perspective de l'ensemble de la figure 3 dans une première configuration ;
- la figure 5 est une coupe longitudinale à plus grande échelle, selon la ligne V-V à la figure 4 ;
- la figure 6 est une vue analogue de la figure 4, l'ensemble étant dans une autre configuration ; et
- la figure 7 est une coupe de principe à plus grande échelle, selon la ligne VII-VII à la figure 6.

La motocyclette 1 représentée sur les figures comprend un cadre 2 qui supporte un moteur à combustion interne 3. Une poutre supérieure 21 du cadre 2 s'étend au-dessus du moteur 3 et permet de supporter, notamment, la tête de fourche de la motocyclette 1.

De façon connue en soi, le moteur 3 entraîne au moyen d'une chaîne 4 la roue arrière 5 de la motocyclette.

Cette motocyclette comprend une selle 6 ainsi qu'un guidon 7 de manoeuvre de la roue avant 8 de la motocyclette.

Le réservoir 9 de carburant utilisé dans le moteur 3 est situé globalement sous la selle 6 et accessible à travers une trappe 91 disposée à l'arrière de la selle.

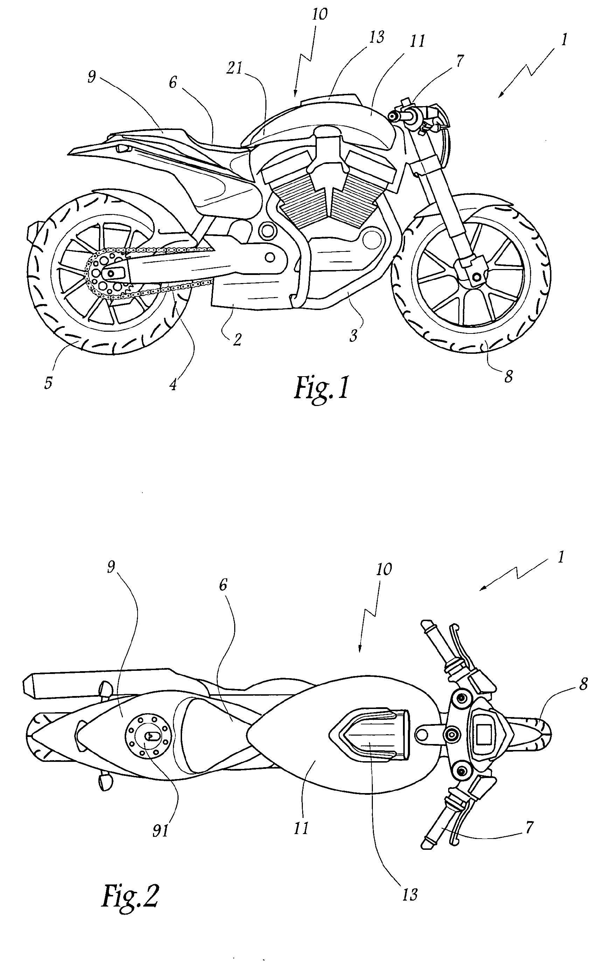

Un ensemble d'admission d'air comburant dans le moteur 3 est disposé entre la selle 6 et le guidon 7. Cet ensemble 10 s'étend au-dessus du moteur 3, de façon globalement symétrique par rapport à un plan médian P₁ de la motocyclette qui est vertical lorsque celle-ci est dans la configuration des figures 1 et 2. L'ensemble 10 est supporté par la poutre 21.

L'ensemble 10 permet d'alimenter le moteur 3 en air de combustion, ou air comburant, d'une façon contrôlée et optimisée.

L'ensemble 10 comprend un boîtier 11 obtenu par moulage de matière plastique, par exemple de polyéthylène, et dans lequel est disposé un filtre à air 12 de forme globalement annulaire. Ce filtre comprend deux anneaux de support 121 et un média filtrant 122.

Une fois disposé dans le boîtier 11, le filtre 12 divise le volume interne du boîtier 11 en une chambre intérieure C₁ et une chambre extérieure C₂, ces chambres étant disposées respectivement radialement à l'intérieur et à l'extérieur du filtre 12.

La chambre C₁ est alimentée en air à travers un module 13 qui est monté en partie supérieure du boîtier 11 et qui est équipée de deux obturateurs en forme de volets 131 et 131' montés pivotant autour d'un axe géométrique X₁ perpendiculaire au plan P₁ et matérialisé par un arbre 132 pourvu d'une patte d'actionnement 132a. L'arbre 132 est monté pivotant sur une coque en aluminium 133 fixée sur le boîtier 11.

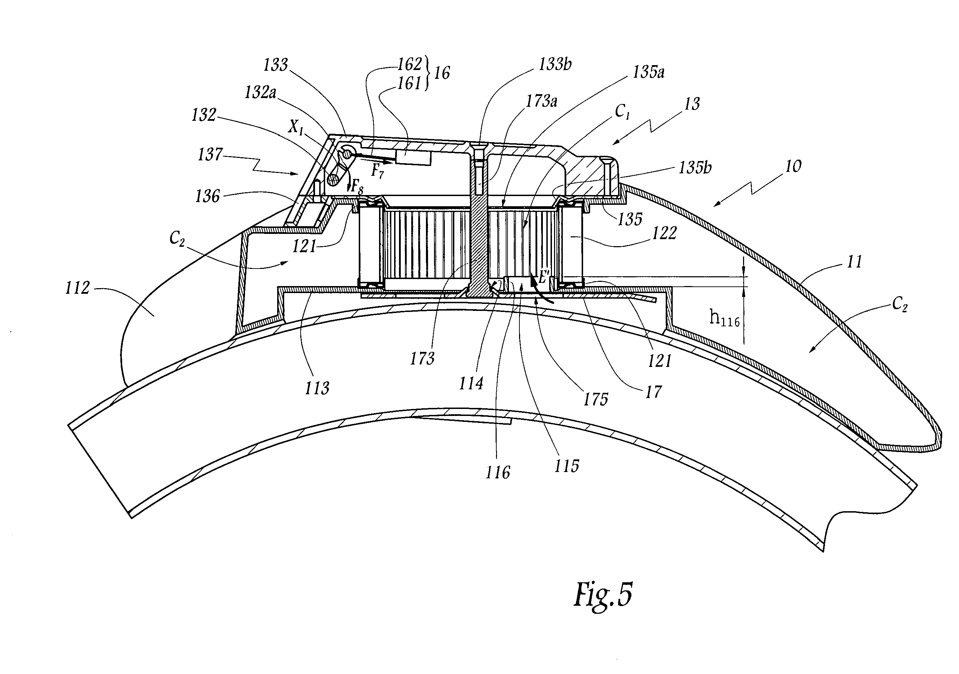

Une plaque d'étanchéité 135 est intercalée entre la coque 133 et le logement en creux 111 prévu en partie supérieure du boîtier 11 pour la réception du module 13. La plaque 135 est pourvue d'une ouverture circulaire centrale 135a dont le diamètre est choisi en fonction des caractéristiques du moteur 3. La plaque 135 coiffe l'anneau supérieur 121 du filtre 12 en configuration montée de l'ensemble 10, comme représenté à la figure 5.

Le module 13 comprend également un élément 136 en aluminium complémentaire de la coque 133 et destiné à être rapporté sur celle-ci pour définir deux bouches 137 et 137' dans lesquels sont respectivement disposés les volets 131 et 131'.

La plaque 135 est pourvue de perçages 135c de réception de vis auto taraudeuses 134 engagées dans des perçages de la coque 133, de sorte que le module 13 peut être assemblé en associant les pièces 131 à 135 puis en serrant les vis 134.

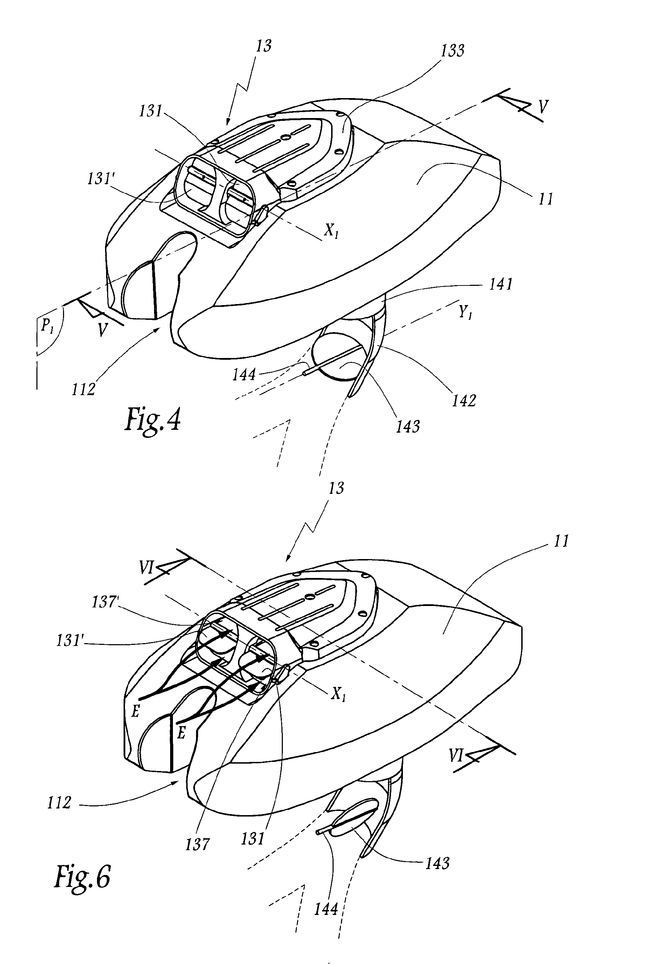

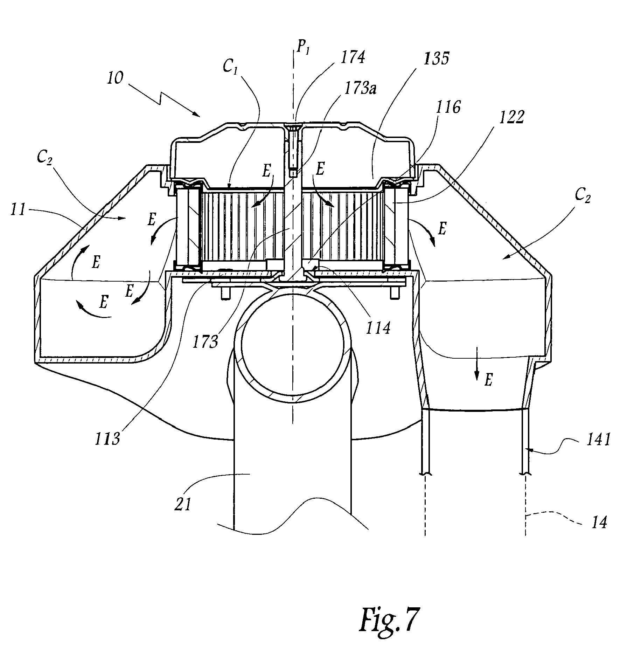

Comme il ressort plus particulièrement de la comparaison des figures 4 et 6, les volets 131 et 131' peuvent pivoter autour de l'axe X₁ entre la position des figures 4 et 5, où ils obturent chacun la bouche correspondante 137 ou 137', et la position de la figure 6, où ils autorisent un écoulement E d'air vers l'intérieur de la coque 133 et vers la chambre C₁, à travers l'ouverture 135a.

Comme cela ressort de la figure 7, l'écoulement E traverse alors le média 122 et parvient dans la chambre C₂ où il se stabilise compte tenu du volume relativement important de la chambre C₂. A partir de cette chambre, l'écoulement E pénètre dans une tubulure 14 formée d'un manchon coudé en élastomère 141 et d'un tube en Y 142 dans la branche commune duquel est disposé un obturateur ou volet 143 contrôlant l'admission d'air vers les carburateurs des deux cylindres du moteur 3 qui sont respectivement raccordés aux deux branches de sortie du tube 142. Pour la clarté du dessin, seule une partie de la tubulure 14 est représentée, de façon très schématique, à la figure 7.

Le volet 143 est en forme de disque et son diamètre est adapté au diamètre interne du tube 142.

Le volet 143 est mobile en pivotement autour d'un axe Y₁ globalement parallèle au plan P₁ et matérialisé par un arbre 144 monté pivotant, transversalement au tube 142.

L'ensemble 10 est monté sur la motocyclette de telle sorte que ses bouches 137 et 137' sont orientées vers l'avant, c'est-à-dire du côté d'une encoche 112 ménagée dans le boîtier 11 pour accommoder le tube du cadre 2 sur lequel pivote la tête de fourche de la motocyclette. L'ensemble 10 occupe donc le volume habituellement réservé au réservoir de carburant des motocyclettes classiques. Ceci est possible du fait que le réservoir 9 est prévu sous la selle 6. Le volume disponible pour le boîtier 11 est donc comparable à celui habituellement dévolu au réservoir de carburant, de sorte que la chambre C₂ peut avoir un volume de plusieurs litres, notamment supérieur à 10 litres.

La géométrie et l'aspect extérieur du boîtier 11 peuvent être définis avec une liberté plus importante que ceux des réservoirs de carburant des motocyclettes classiques, lesquels doivent parfois intégrer des pompes à carburant ou d'autres accessoires. En effet, la seule contrainte réelle est que le volume interne de ce boîtier soit suffisant pour former une chambre de stabilisation C₂ de l'écoulement d'air adaptée au moteur 3.

L'ensemble 10 est symétriquement par rapport au plan P₁, sauf en ce qui concerne la tubulure 14 qui est prévue sur un seul côté de la motocyclette 1. Le plan P₁ est vertical en configuration normale d'utilisation de la motocyclette.

En fonctionnement, c'est-à-dire lorsque la motocyclette avance, l'orientation vers l'avant des bouches 137 et 137' permet que le flux d'air autour de la motocyclette pénètre naturellement dans la chambre C₁ en restant laminaire, sous la forme de l'écoulement E, dès que les volets 131 et 131' sont basculés de leur position de la figure 4 vers leur position de la figure 6.

Dans cette configuration, les parties des volets 131 et 131' qui font saillie en avant des bouches 137 et 137' en position d'ouverture totale guident l'air vers ces bouches.

Les volets 131 et 131' sont commandés dans leur déplacement entre la configuration de la figure 4 et celle de la figure 6 au moyen d'un électro-aimant 161 piloté en fonction du régime du moteur 3 et fixé sous la face supérieure de la coque 133. Lorsqu'il est excité, l'électro-aimant 161 exerce, sur une biellette 162 accrochée sur la patte 132a, un effort de traction F₇ qui tend à faire basculer les volets 131 et 131' dans le sens de la flèche F₈.

L'électro-aimant 161 et la biellette 162 constituent donc des moyens 16 de commande des mouvements des volets 131 et 131', étant entendu qu'un ressort non représenté peut être intégré à l'électro-aimant 161 pour ramener par défaut les volets dans la configuration de la figure 4.

Le fonctionnement est satisfaisant lorsque l'électro-aimant est commandé de façon binaire, ce qui correspond à deux configuration de fonctionnement des volets 131 et 131', à savoir la configuration totalement fermée de la figure 4 et la configuration totalement ouverte de la figure 6. Toutefois, une commande proportionnelle de la position des volets 131 et 131' peut être envisagée au moyen d'un pilotage approprié de l'électro-aimant.

En pratique, l'électro-aimant est commandé au moyen d'une unité de commande électronique (UCE ou ECU) adaptée, elle même reliée à une sonde de température de l'huile moteur.

On note que le pilotage des volets 131 et 131' est indépendant de la commande du volet 143.

Selon une variante non représentée de l'invention, les moyens de commande 16 peuvent comprendre, à la place des éléments 161 et 162, un câble, par exemple un câble de vélo, accroché sur la patte 132a et commandé mécaniquement, électro-magnétiquement ou pneumatiquement.

Selon une autre variante également non représentée, un moteur électrique peut commander le pivotement de l'arbre 132 autour de l'axe X₁.

L'ensemble 10 est fixé sur la poutre 21 au moyen d'une plaque 17 solidarisée à cette poutre grâce à des vis 171 en prise sur des pattes 21a soudées sur la poutre 21. Une tige 173 pourvue d'un taraudage central 173a s'étend à l'opposé de la poutre 21 par rapport à la plaque 17 et pénètre dans un orifice 114 ménagé dans le fond 113 du boîtier 11. Par ailleurs, un perçage 133b est ménagé dans la coque 133 et reçoit une vis 174 destinée à être serrée dans le taraudage 173a de la tige 173 après que le filtre à air 12 et le module 13 ont été mis en place. Ainsi, par le serrage de la vis 174 dans la tige 173, on immobilise l'ensemble 10 sur la poutre 21 de façon particulièrement rapide, le boîtier 11 étant intercalé et serré entre les éléments 13 et 17. Ceci facilite les opérations d'assemblage de la motocyclette 1 et les opérations de maintenance puisqu'il suffit de desserrer la vis 174 pour accéder au volume interne du boîtier 11 et au filtre à air 12, après avoir retiré le module 13.

En variante, une vis du type de la vis 174 peut être prévue sur la plaque 17, alors qu'un taraudage correspondant, du type du taraudage 173a, est porté par la coque 133.

Le fond 113 du boîtier 11 est percé d'un second orifice 115 bordé par un manchon 116 disposé sur la face du fond 113 tournée vers la chambre C₁. Lorsque le boîtier 11 est monté sur la plaque 17, l'orifice 115 est disposé en regard d'une ouverture 175 managée dans cette plaque 17 de telle sorte qu'un écoulement d'air E' peut avoir lieu à travers l'orifice 115, comme représenté à la figure 5, alors que les volets 131 et 131' sont en position d'obturation des bouches 137 et 137'. Ceci permet d'alimenter en air comburant le moteur 3 lorsque celui-ci tourne à faible régime, c'est-à-dire un régime tel que l'électroaimant 161 n'exerce pas d'effort F₇ sur la biellette 162.

Le manchon 116 permet de guider l'écoulement E' vers la chambre C₁. Sa hauteur h₁₁₆ est choisie en fonction des caractéristiques recherchées pour l'écoulement E'.

En variante, plusieurs orifices du type de l'orifice 115 peuvent être prévus dans le fond 113.

Le fait que l'orifice 115 et l'ouverture 175 sont disposés en partie inférieure de l'ensemble 10 induit que l'écoulement E' est un écoulement d'air relativement chaud puisqu'il provient d'une zone proche du moteur 3. Ceci est favorable pour le fonctionnement du moteur 3 à bas régime. Au contraire, lorsque le moteur tourne à régime élevé, l'écoulement E à travers les bouches 137 et 137' est un écoulement d'air frais, ce qui est également favorable en termes de combustion.

En outre, du fait du volume de la chambre C₂, l'ensemble 10 permet de diminuer les turbulences de l'écoulement E par rapport à un écoulement d'air comburant dans une motocyclette classique. Les bruits générés par cet écoulement sont donc diminués, ce qui facilite l'homologation d'une motocyclette équipée de l'ensemble 10 vis-à-vis des normes en vigueur en matière de bruit.

L'invention a été représentée dans le cas d'un moteur à carburateur. Elle est toutefois applicable à un moteur équipé d'un système d'injection.

L'invention a été représentée avec deux volets 131 et 131'. Elle est toutefois applicable avec un seul tel volet.

L'invention a été représentée avec des volets 131, 131' et 143 pivotants. Elle est toutefois applicable avec des volets ou obturateurs coulissants respectivement par rapport aux bouches 137 et 137' et à la tubulure 14. Selon le type exact de la tubulure 14, deux obturateurs peuvent être prévus dans le tube 142, un dans chacune des branches alimentant un cylindre.

## Revendications

1. Ensemble (10) d'admission d'air comburant pour le moteur (3) d'une motocyclette (1), cet ensemble comprenant :
- un filtre à air (12) ;
- une tubulure (14) d'amenée d'air au moteur à partir du filtre à air ;
- un boîtier (11) destiné à être monté en partie supérieure de la motocyclette et formant support pour le filtre à air (12) ;
- un module d'entrée d'air (13) rapporté sur le boîtier et équipé d'au moins un obturateur (131, 131') mobile entre une première position (figure 4), où il obture une bouche (137, 137') d'écoulement d'air vers une zone interne (C₁) du boîtier, située en amont du filtre à air, et une deuxième position (figure 6), où il autorise un écoulement d'air (E) dans la bouche d'air, en direction de la zone interne du boîtier ;
- des moyens (16) de commande des mouvements de l'obturateur (131, 131') entre ses première et deuxième positions et
- des moyens (17, 171-174) de montage de l'ensemble en partie supérieure (21) de la motocyclette (1),
**caractérisé en ce que** le filtre à air (12) est de forme globalement annulaire et, lorsqu'il est disposé à l'intérieur du boîtier (11), divise le volume interne du boîtier en une chambre radiale interne (C₁) et une chambre radiale externe (C₂), **en ce que** la chambre radiale interne (C₁) est alimentée en air à travers le module d'entrée d'air (13) et **en ce que** la chambre radiale externe (C₂) forme, autour du filtre à air, une chambre de stabilisation de l'écoulement d'air (E) en aval du filtre à air.

2. Ensemble selon la revendication 1, **caractérisé en ce que** le filtre à air (12) est annulaire et divise le volume interne du boîtier (11) en deux parties, à savoir la zone amont (C₁) située radialement à l'intérieur du filtre et la chambre de stabilisation (C₂) située radialement à l'extérieur du filtre.

3. Ensemble selon l'une des revendications précédentes, **caractérisé en ce que** la tubulure (14), disposée entre la chambre de stabilisation et le moteur (3), est équipée d'au moins un obturateur (143) mobile entre une première position (figure 4), où il obture la tubulure, et une seconde position (figure 6), où il permet un écoulement (E) dans la tubulure.

4. Ensemble selon l'une des revendications précédentes, **caractérisé en ce qu'**il comprend des moyens (115, 116) distincts du module d'entrée d'air (13) et permettant d'alimenter en air (E') la zone interne (C₁), alors que l'obturateur (131, 131') du module d'entrée d'air (13) est dans sa première position

5. Ensemble selon l'une des revendications précédentes, **caractérisé en ce que** les moyens de montage comprennent des moyens (17, 171, 173, 174) d'immobilisation de l'ensemble sur une poutre (21) du châssis (2) de la motocyclette située au-dessus du moteur (3).

6. Ensemble selon la revendication 5, **caractérisé en ce que** les moyens de montage comprennent une plaque (17) apte à être rapportée sur la poutre (21) et à supporter le boîtier (11) équipé du module (13).

7. Ensemble selon la revendication 6, **caractérisé en ce que** les moyens de montage comprennent une vis (174) et un taraudage complémentaires (173a) portés respectivement par le module d'entrée d'air (13) et par la plaque (17), ou réciproquement, la vis (174) et/ou un organe (173) pourvu du taraudage s'étendant à travers la zone amont (C₁) du boîtier (11) et permettant un assemblage du module (13) et de la plaque (17) par vissage, le boîtier étant intercalé entre le module et la plaque.

8. Motocyclette (1) équipée d'un ensemble d'admission d'air (10) selon l'une des revendications précédentes, installé globalement entre la selle (6) et le guidon (7) de la motocyclette, au-dessus du moteur (3), la chambre de stabilisation (C₂) étant disposée de façon globalement symétrique par rapport à un plan médian (P₁) vertical de la motocyclette en configuration d'utilisation.

9. Motocyclette selon la revendication 8, **caractérisée en ce que** le module d'entrée d'air (13) est disposé sur le dessus du boîtier (11), avec sa ou ses bouches (137, 137') orientées vers l'avant de la motocyclette.

10. Motocyclette selon l'une des revendications 8 ou 9, **caractérisée en ce que** l'ensemble d'admission d'air (10) occupe sensiblement le volume du réservoir de carburant d'une motocyclette classique.
